# EUROPÄISCHE PATENTSCHRIFT

(11) **EP 1 359 652 B1**
(45) Veröffentlichungstag und Bekanntmachung des Hinweises auf die Patenterteilung: **16.08.2006**
(21) Anmeldenummer: 03007503.0
(22) Anmeldetag: 01.04.2003
(51) Int. Cl.: H02G 3/04

(54) **Leitungsführungskanal**
Cable channel
Chemin de câbles

(30) Priorität: 30.04.2002 DE 20206869 U
(43) Veröffentlichungstag der Anmeldung: 05.11.2003
(73) Patentinhaber: Tehalit GmbH, 67716 Heltersberg (DE)
(72) Erfinder: Nauerz, Uwe, 66851 Steinalben (DE); Wittmann, Jan, 67714 Waldfischbach (DE)
(74) Vertreter: Patentanwälte Möll und Bitterich

(56) Entgegenhaltungen:
- EP-A- 0 742 625
- US-A- 4 990 722

## Beschreibung

Die Erfindung betrifft Leitungsführungskanäle gemäß dem Oberbegriff des Anspruchs 1.

Leitungsführungskanäle sind seit über 100 Jahren bekannt und in Gebrauch. Ursprünglich aus Holz und Metall hergestellt, bestehen sie heute überwiegend aus Kunststoff, insbesondere thermoplastischem Kunststoff. Leitungsführungskanäle aus Aluminium oder Stahlblech sind ebenfalls in Gebrauch.

Leitungsführungskanäle der hier relevanten Art bestehen im wesentlichen aus einem Unterteil mit einem etwa U- bzw. C-förmigen Querschnitt und einem lösbar aufsetzbaren Deckel. In das Unterteil werden elektrische Leitungen, beispielsweise für Starkstrom oder Telekommunikation, eingelegt. In manchen Fällen werden auch Rohrleitungen, beispielsweise Heizungsrohre, in derartigen Kanälen verlegt.

Sind diese Leitungsführungskanäle an Wänden und insbesondere Decken befestigt, so können die darin verlegten Leitungen bei abgenommenem Deckel aus der offenen Vorderseite des Kanalunterteils herausfallen. Um dies zu verhindern, werden spezielle Klammern verwendet, die mit gegenseitigem Abstand montiert werden und die offene Vorderseite des Kanalunterteils überbrücken. Beispiele für solche Klammern finden sich in der DE-AS 20 17 232, DE-AS 21 09 613, DE-AS 22 45 626, US 3 890 459, DE-PS 24 08 310, DE-AS 21 23 958 oder DE-A 41 03 707.

Aus der EP 0 742 625 A ist ein Kabelkanal mit einer symmetrischen Halteklammer bekannt. Die Halteklammer ist als vorgestanzter Bereich des Kanalbodens ausgebildet. Bei Bedarf wird sie aus dem Boden herausgebrochen, wobei im Boden ein Loch entsteht.

Aus der US 4,990,722 ist ein anderer Kabelkanal mit einer Halteklammer bekannt. Der Kabelkanal ist durch maximal drei Trennwände in maximal vier Kammern unterteilt. Die Halteklammer kann in maximal vier Kurzklammern gebrochen werden. Diese Kurzklammern sind nur noch in Verbindung mit den Trennwänden zu benutzen.

Aus der DE-AS 21 23 958 schließlich sind Klammern für Leitungsführungskanäle bekannt, die zwischen einer ersten Winkelposition, die parallel zur Längsrichtung der Kanäle orientiert ist, und einer zweiten Winkelposition, die sich im rechten Winkel dazu erstreckt, verschwenkt werden können. Die Klammern sind zu diesem Zweck mit einer Drehachse ausgerüstet, die in einer Bohrung am Kanalunterteil gelagert ist, wobei durch geeignete Konstruktion dafür gesorgt wird, dass die Klammer nur in der ganz geöffneten Position montiert und demontiert werden kann.

Klammern für Leitungsführungskanäle sollen nicht nur verhindern, dass bei abgenommenem Deckel bereits eingelegte Leitungen herausfallen, sondern sollen auch das nachträgliche Einlegen oder Herausnehmen von Leitungen ermöglichen. Außerdem sollen sie das Kanalunterteil zusätzlich stabilisieren.

Leitungsführungskanäle werden üblicherweise mit Klammern ausgeliefert. Die Klammern sind entweder in das Kanalunterteil geklemmt (DE-A 41 03 707) oder werden in Beutel eingeschweißt dem Kanal beigelegt. Werden diese benötigt, muss der Installateur sie aus der Klemmung lösen bzw. aus dem Beutel herausnehmen und von Hand montieren. Dies bedingt einen zusätzlichen Zeit- und Kostenaufwand für den Installateur. Das ist unbefriedigend.

Auch die Befestigung zwischen Klammer und Kanalunterteil wirft einige Probleme auf. Einerseits muss die Klammer lösbar sein, um Kabel und Leitungen verlegen zu können, andererseits soll auch bei geöffneter Klammer verhindert werden, dass bereits verlegte Kabel und Leitungen herausfallen. Einerseits soll die Klammer in Kanallängsrichtung leicht verschiebbar sein, andererseits soll die Klammer so fest sitzen, dass sie das Kanalunterteil stabilisiert. Aus diesen Gründen hat die Industrie eine Vielzahl von Konstruktionen entwickelt. Eine bestimmte Konstruktion, die mit Langschlitzen in den Seitenwänden bzw. den an die Seitenwände angrenzenden Frontleisten arbeitet, ist aus der FR 626 472 A oder auch der DE 28 36 130 bekannt.

Ein weiteres Problem ergibt sich, wenn die Leitungsführungskanäle eine oder mehrere Trennwände besitzen, die das Kanalunterteil in Kammern unterteilen. Zur Stabilisierung dieser Trennwände ist es bekannt, die Klammern auf der Unterseite mit entsprechenden Rastvorrichtungen auszurüsten. Man vergleiche die DE 20 17 232. Diese Klammer lässt sich sehr einfach montieren, angesichts der vielen Verrastungen jedoch kaum wieder demontieren. Damit ist das nachträgliche Verlegen von Kabeln und Leitungen jedoch erheblich erschwert.

Sind die Leitungsführungskanäle wie erwähnt mit Trennwänden ausgerüstet, so besteht oft der Wunsch, Kabelhalteklammern nur über einen Teil der Breite zu verlegen, so dass nur die eine oder andere Kammer verschlossen wird. Zu diesem Zweck ist die in der erwähnten DE-AS 20 17 232 beschriebene Klammer mit Sollbruchlinien ausgerüstet und kann so in kürzere Stücke gebrochen werden. Ist die Klammer jedoch einmal gebrochen, ist es nicht mehr möglich, mit ihr die volle Kanalbreite zu verschließen.

Der vorliegenden Erfindung liegt daher die Aufgabe zugrunde, ein Klammer für Leitungsführungskanäle anzugeben, die es möglich macht, gleichzeitig sowohl die volle Kanalbreite als auch nur einzelne Kammern lösbar zu verschließen.

Diese Aufgabe wird gelöst durch einen Leitungsführungskanal mit den Merkmalen des Anspruchs 1.

Dank der Ausbildung des Klammerfußes als federnde Zange lässt sich die Klammer problemlos auf die eine Frontleiste des Kanalunterteils aufstecken bzw. aufrasten. Der Klammerkopf bleibt zunächst frei, so dass das Verlegen von Kabeln und Leitungen nicht behindert wird. Sind die Verlegearbeiten beendet, werden die federnden Seitenleisten des Klammerkopfes mit ihren Haltenasen in die Langlöcher der anderen Frontleiste eingesteckt, wo sie unverrückbar fest sitzen.

Besteht der Wunsch, eine durch eine Trennwand abgeteilte Kammer im Kanalunterteil mittels Klammer zu verschließen, so kann die Kurzklammer aus der Hauptklammer herausgebrochen werden. Die Halte- und Stabilisierungsfunktion der Hauptklammer wird dadurch nicht beeinträchtigt.

Da die Hauptklammer Verbindung nur mit den Frontleisten des Kanalunterteils jedoch nicht mit etwaigen Trennwänden hat, lässt die Hauptklammer sich jederzeit problemlos öffnen, um weitere Kabel und Leitungen verlegen zu können.

Vorteilhafterweise sind Kurzklammer und Hauptklammer einstückig gefertigt und über Sollbruchstellen verbunden. Auf diese Weise hat der Installateur alle für einen bestimmten Kanaltyp benötigten Klammerlängen zur Verfügung.

Gemäß einer Ausgestaltung der Erfindung trägt eine Seitenfläche des Klammerfußes einen zur Frontleiste hin gerichteten Schwenknocken. Dieser Schwenknocken ermöglicht es, die Hauptklammer um 90° zu verschwenken, ohne dass der Klammerfuß sich von der Frontleiste löst. Ist die Hauptklammer in Kanallängsrichtung geschwenkt, ist praktisch die gesamte Kanalbreite offen. Die Klammer kann jedoch nicht verloren gehen und lässt sich nach Einlegen der ersten Leitungen oder Leitungsbündel um 90° schwenken. Der Kopf der Hauptklammer wird in Öffnungen der Frontleiste eingerastet und der Kanal geschlossen.

Zum weiteren Einlegen von Leitungen wird der Klammerkopf zusammengedrückt und somit aus den Öffnungen der Fußleiste gelöst. Die Klammer wird in eine definierte Stellung ca. 5° vor den Kanal verschwenkt. Die Klammer steht aber weiterhin senkrecht zur Kanallängsrichtung und verhindert ein Herausfallen der bereits eingelegten Leitungen.

Damit die Kurzklammer ihre Funktion in vollem Umfang erfüllen kann, besitzt sie gemäß einer Ausgestaltung der Erfindung einen leistenförmigen Klammerkörper, einen Klammerkopf, der unter der L-förmigen Frontleiste verhakt werden kann, und einen Klammerfuß, der zangenartig mit dem Kopf einer Trennwand oder dergleichen kooperiert.

Gemäß einer besonders bevorzugten Ausgestaltung der Erfindung liegt die Kontur der Kurzklammer innerhalb der Kontur der Hauptklammer. Dadurch ist sichergestellt, dass Klammerkopf und Klammerfuß der Kurzklammer keine Verbindung mit Trennwänden usw. eingehen können, solange sie noch in die Hauptklammer integriert sind.

Anhand der Zeichnung soll die Erfindung in Form eines Ausführungsbeispiels näher erläutert werden. Es zeigen
- Fig. 1: eine Draufsicht auf eine Kabelhalteklammer für Leitungsführungskanäle,
- Fig. 2: einen Schnitt durch die Kabelrückhalteklammer der Fig. 1 entlang der Linie II-II,
- Fig. 3: eine Draufsicht auf eine erste Kurzklammer,
- Fig. 4: eine Draufsicht auf eine zweite Kurzklammer,
- Fig. 5: eine Schrägansicht eines Leitungsführungskanals mit montierter Kabelrückhalteklammer gemäß Fig. 1,
- Fig. 6: eine Schrägansicht eines Leitungsführungskanals mit montierter Kabelrückhalteklammer gemäß Fig. 1 und montierter Kurzklammer gemäß Fig. 4,
- Fig. 7: eine Schrägansicht eines Leitungsführungskanals mit montierter Kabelrückhalteklammer gemäß Fig. 1 und montierter ' Kabelrückhalteklammer gemäß Fig. 3,
- Fig. 8: eine Schrägansicht eines Leitungsführungskanals mit montierter und in Längsrichtung geschwenkter Kabelrückhalteklammer gemäß Fig. 1,
- Fig. 9: eine Schrägansicht des Leitungsführungskanals mit montierter, zum Nachlegen von Leitungen um 5° nach vorn gekippter Klammer und
- Fig. 10: eine Frontansicht durch den Kanal der Fig. 9.

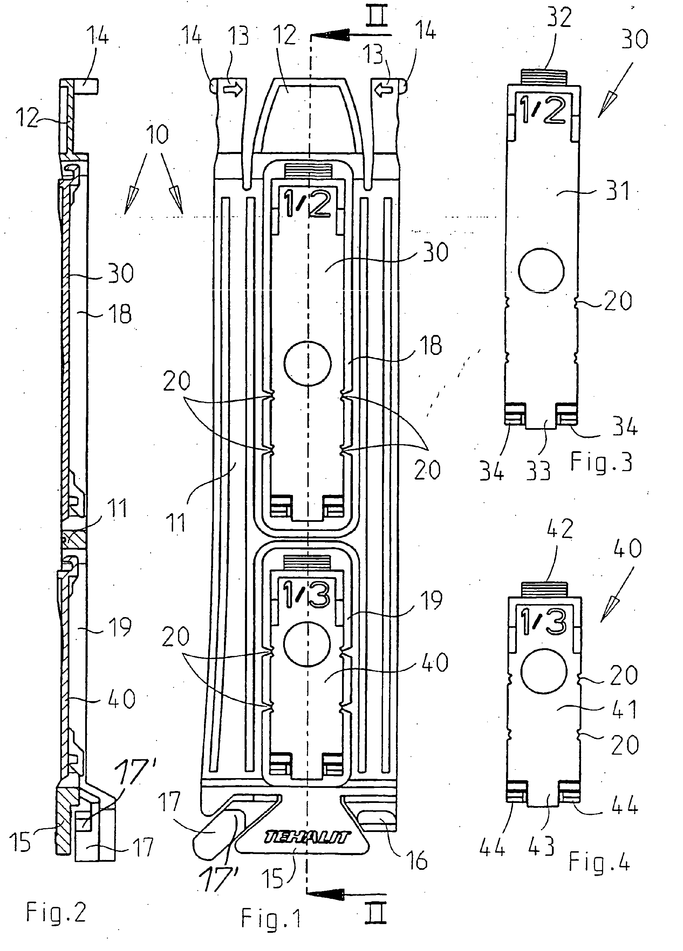

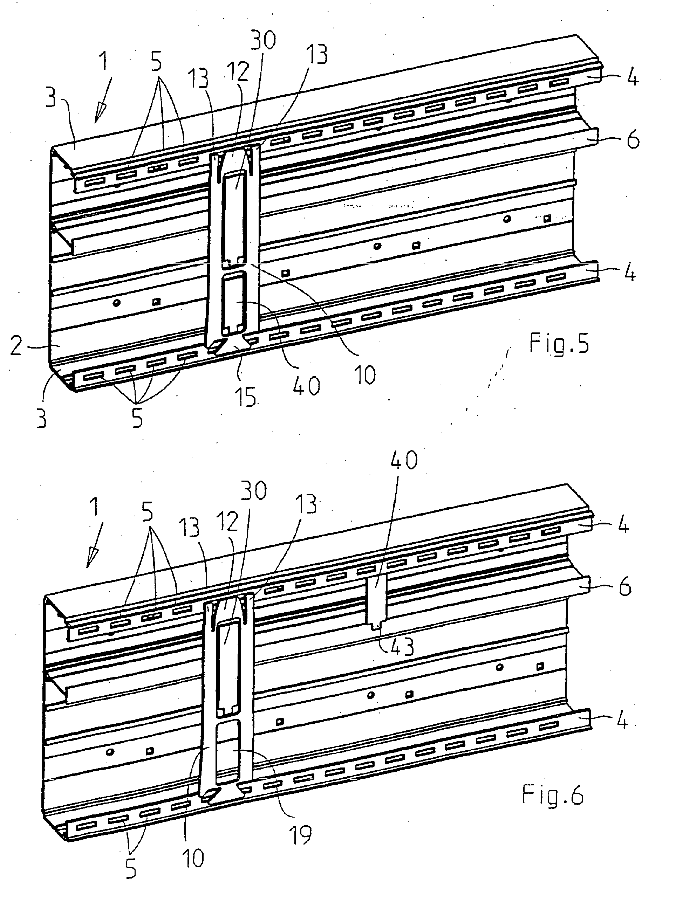

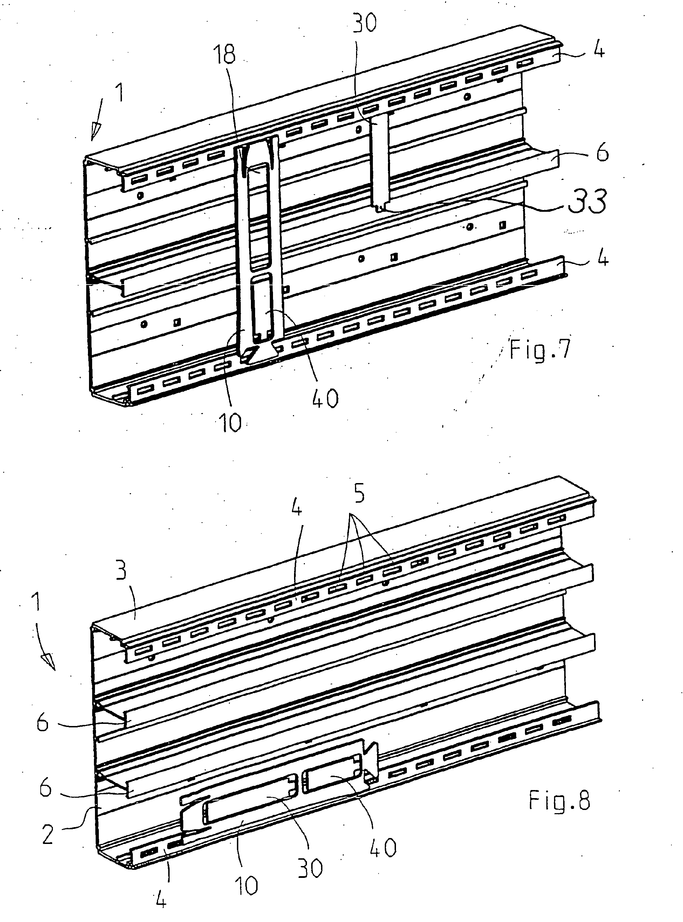

Fig. 1 als Draufsicht und Fig. 2 als Schnitt entlang der Linie II-II in Fig. 1 zeigen eine Kabelrückhalteklammer 10, gebildet durch einen leistenförmigen Klammerkörper 11 mit zwei etwa rechteckigen Aussparungen 18, 19 unterschiedlicher Länge. Am einen Ende des Klammerkörpers 11 ist ein Klammerfuß ausgebildet, bestehend aus einer Mittelfläche 15 und zwei Seitenflächen 16, 17, die gemeinsam eine Art Zange bilden, die mit den Frontleisten 4 eines Leitungsführungskanals 1 (Fig. 5 bis 8) kooperiert. An der linken Seitenfläche 17 ist ein Schwenknocken 17' angeformt, dessen Funktion anhand der Fig. 8 näher erläutert wird.

Am anderen Ende des Klammerkörpers 11 ist ein Klammerkopf gebildet, bestehend aus einer Mittelfläche 12 und zwei federnden Seitenleisten 13 mit je einer Haltenase 14. Die Seitenleisten 13 und die Haltenasen 14 kooperieren mit Langlöchern 5 in den Frontleisten 4 der Leitungsführungskanäle 1 (Fig. 5 bis 8).

In den Aussparungen 18, 19 befindet sich je eine Kurzklammer 30, 40. Diese sind mit der Hauptklammer 10 einstückig hergestellt und über Sollbruchstellen 20 mit dieser lösbar verbunden.

Fig. 3 zeigt die längere, Fig. 4 die kürzere Kurzklammer 30, 40. Beide umfassen einen leistenförmigen Klammerkörper 31, 41 mit einem Klammerkopf 32, 42 an der einen Seite und einem Klammerfuß an der anderen Seite. Der Klammerfuß wird gebildet durch eine Mittelfläche 43 und zwei Seitenflächen 44, die mit dem Kopf einer Trennwand 6 oder dergleichen (Fig. 5 bis 8) zangenartig zusammenwirken. Der Klammerkopf 32, 42 ist so gestaltet, dass er mit der L-förmigen Frontleiste 4 lösbar verrastet werden kann.

Fig. 5 zeigt eine Schrägansicht eines Leitungsführungskanals 1, gebildet durch einen Boden 2, zwei Seitenwände 3 und L-förmige Frontleisten 4 mit ausgestanzten Langlöchern 5. Auf die untere Frontleiste 4 ist der Klammerfuß 15 der Hauptklammer 10 aufgerastet. Der Klammerkopf 12 mit den Haltenasen 14 an den federnden Seitenleisten 13 ist in den Langlöchern 5 verrastet. Die Klammer 10 verschließt die volle Breite des Leitungsführungskanals 1. Die Kurzklammern 30, 40 sind mit der Hauptklammer 10 verbunden.

Fig. 6 zeigt eine erste Variante. Die Kurzklammer 40 ist aus der Öffnung 19 der Hauptklammer 10 herausgebrochen. Ihr Klammerfuß 43 ist auf den Kopf der Kanaltrennwand 6 aufgesteckt, ihr Klammerkopf ist unter der Frontleiste 4 verhakt.

Fig. 7 zeigt eine weitere Variante. Hier ist die längere Kurzklammer 30 aus der Aussparung 18 der Hauptklammer 10 herausgebrochen. Ihr Fuß 33 ist auf den Kopf der Kanaltrennwand 6 aufgesteckt, ihr Kopf unter der Frontleiste 4 verhakt.

Fig. 8 zeigt ein weiteres Anwendungsbeispiel. Die Klammer 10 ist mit ihrem Fuß 15, 17 auf die Frontleiste 4 des Leitungsführungskanals 1 aufgesteckt und um 90° in Kanallängsrichtung geschwenkt. Dabei sorgt der an der Seitenfläche 17 angeformte Schwenknocken 17' dafür, dass die Klammer 10 um 90° geschwenkt werden kann, ohne sich von der Frontleiste 4 zu lösen.

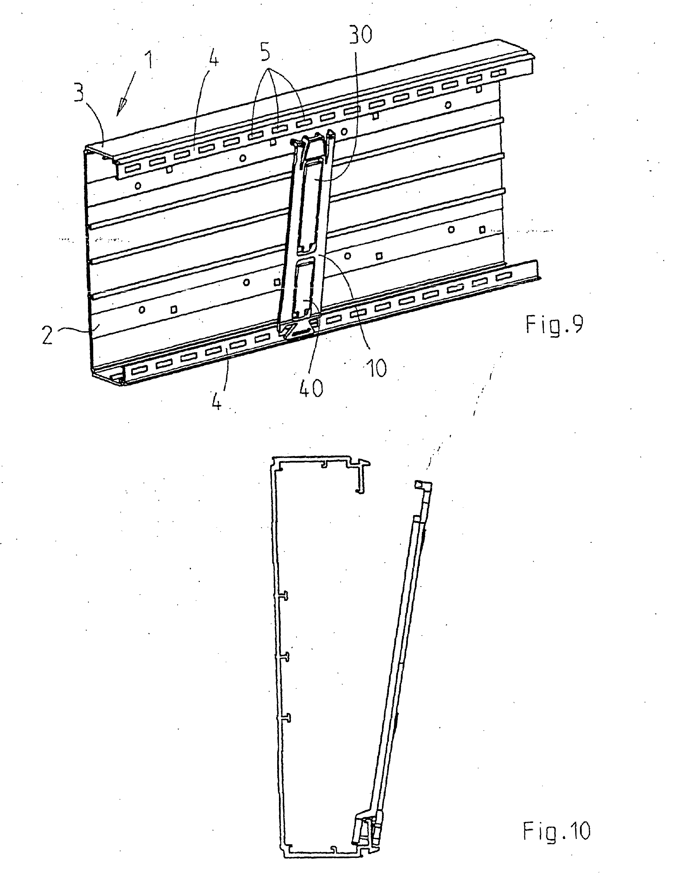

Fig. 9 als Schrägansicht und Fig. 10 als Frontansicht zeigen den Leitungsführungskanal 1 mit montierter Hauptklammer (10). Der Klammerkopf ist gelöst und die Klammer (10) um ca. 5° nach vorne gekippt. Dadurch entsteht eine Öffnung, die das Verlegen von Leitungen vereinfacht.

## Patentansprüche

1. Leitungsführungskanal, im wesentlichen umfassend
- ein Kanalunterteil (1) mit
― einem Boden (2),
― Seitenwänden (3)
― und sich etwa parallel zum Boden (2) erstreckenden, L-förmigen Frontleisten (4) mit Langlöchern (5),
- und wenigstens eine Klammer (10) mit
― einem leistenförmigen Klammerkörper (11),
― einem Klammerkopf, gebildet durch
― eine Mittelfläche (12)
― und zwei federnde Seitenleisten (13) mit je einer Haltenase (14), wobei Seitenleisten (13) und Haltenasen (14) mit den Langlöchern (5) kooperieren,
― und einem Klammerfuß, gebildet durch
― eine Mittelfläche (15)
― und zwei Seitenflächen (16, 17),
- die Mittelfläche (15) und die beiden Seitenflächen (16, 17) des Klammerfußes bilden eine Art Zange, die mit den Frontleisten (4) kooperiert,
**gekennzeichnet durch** die Merkmale:
- der Klammerkörper (11) besitzt wenigstens eine Aussparung (18, 19),
- in der Aussparung (18, 19) ist eine Kurzklammer (30, 40) lösbar befestigt,
- die Kurzklammer (30, 40) besitzt
― einen leistenförmigen Klammerkörper (31, 41),
― einen Klammerkopf (32, 42)
― und einen Klammerfuß (33, 34; 43, 44), der zangenartig mit den Frontleisten (4) kooperiert.

2. Leitungsführungskanal nach Anspruch 1, **gekennzeichnet durch** die Merkmale:
- die Kurzklammer (30, 40) ist mit der Hauptklammer (10)
― einstückig gefertigt
― und über Sollbruchstellen (20) verbunden.

3. Leitungsführungskanal nach Anspruch 1 oder 2, **gekennzeichnet durch** das Merkmal:
- eine Seitenfläche (17) des Klammerfußes trägt einen zur Frontleiste (4) hin gerichteten Schwenknocken (17').

4. Leitungsführungskanal nach einem der Ansprüche 1 bis 3, **gekennzeichnet durch** das Merkmal:
- die Kontur der Kurzklammer (30, 40) liegt innerhalb der Kontur der Hauptklammer (10).

5. Leitungsführungskanal nach einem der Ansprüche 1 bis 4, **gekennzeichnet durch** die Merkmale:
- das Kanalunterteil (1) besitzt wenigstens eine Trennwand (6),
- der Kopf (32, 42) der Kurzklammer (30, 40) kooperiert mit der Trennwand (6).

## Claims

1. Wiring trunking, essentially comprising
- a trunking lower part (1) with
- a bottom (2),
- side walls (3)
- and L-shaped front strips (4), extending approximately parallel to the bottom (2), with elongate holes (5),
- and at least one clamp (10) with
- a strip-shaped clamp body (11),
- a clamp head, formed by
- a centre face (12)
- and two resilient side strips (13) with a respective retaining lug (14), wherein the side strips (13) and the retaining lugs (14) co-operate with the elongate holes (5),
- and a clamp base, formed by
- a centre face (15)
- and two side faces (16, 17),
- the centre face (15) and the two side faces (16, 17) of the clamp base form a kind of pair of tongs which co-operates with the front strips (4),
**characterised by** the features:
- the clamp body (11) has at least one recess (18, 19),
- a short clamp (30, 40) is detachably fastened in the recess (18, 19),
- the short clamp (30, 40) has
- a strip-shaped clamp body (31, 41),
- a clamp head (32, 42)
- and a clamp base (33, 34; 43, 44) which co-operates with the front strips (4) like a pair of tongs.

2. Wiring trunking according to Claim 1, **characterised by** the features:
- the short clamp (30, 40) is
- made in one piece with the main clamp (10)
- and connected to the latter via predetermined breaking points (20).

3. Wiring trunking according to Claim 1 or 2, **characterised by** the feature:
- a side face (17) of the clamp base bears a pivoting lobe (17') which is directed towards the front strip (4).

4. Wiring trunking according to any one of Claims 1 to 3, **characterised by** the feature:
- the contour of the short clamp (30, 40) lies inside the contour of the main clamp (10).

5. Wiring trunking according to any one of Claims 1 to 4, **characterised by** the features:
- the trunking lower part (1) has at least one partition (6),
- the head (32, 42) of the short clamp (30, 40) co-operates with the partition (6).

## Revendications

1. Canal de guidage pour conducteurs ou conduits, comprenant pour l'essentiel
- une partie inférieure (1) comportant
- un fond (2),
- des parois latérales (3)
- et des listels frontaux (4) configurés en L, munis de trous oblongs (5) et s'étendant à peu près parallèlement au fond (2),
- et au moins une agrafe (10) comportant
- un corps d'agrafage (11) en forme de barrette,
- une tête d'agrafage matérialisée par
- une surface médiane (12)
- et deux pans latéraux élastiques (13) dont chacun présente un bec de retenue (14), les pans latéraux (13) et les becs de retenue (14) coopérant avec les trous oblongs (5),
- et une base d'agrafage matérialisée par
- une surface médiane (15)
- et deux surfaces latérales (16, 17)
- la surface médiane (15) et les deux surfaces latérales (16, 17) de la base d'agrafage formant une sorte de pince qui coopère avec les listels frontaux (4),
**caractérisé par le fait**
- **que** le corps d'agrafage (11) possède au moins un évidement (18, 19),
- **qu'**une agrafe courte (30, 40) est fixée amoviblement dans l'évidement (18, 19),
- **que** ladite agrafe courte (30, 40) possède
- un corps d'agrafage (31, 41) en forme de barrette,
- une tête d'agrafage (32, 42)
- et une base d'agrafage (33, 34 ; 43, 44) qui coopère avec les listels frontaux (4), à la manière d'une pince.

2. Canal de guidage pour conducteurs ou conduits, selon la revendication 1, **caractérisé par le fait**
- **que** l'agrafe courte (30, 40)
- est fabriquée d'une seule pièce avec l'agrafe principale (10)
- et est reliée à cette dernière par des zones (20) de cassure programmée.

3. Canal de guidage pour conducteurs ou conduits, selon la revendication 1 ou 2, **caractérisé par le fait**
- **qu'**une surface latérale (17) de la base d'agrafage porte un mentonnet pivotant (17') dirigé vers le listel frontal (4).

4. Canal de guidage pour conducteurs ou conduits, selon l'une des revendications 1 à 3, **caractérisé par le fait**
- **que** le profil de l'agrafe courte (30, 40) se trouve à l'intérieur du profil de l'agrafe principale (10).

5. Canal de guidage pour conducteurs ou conduits, selon l'une des revendications 1 à 4, **caractérisé par le fait**
- **que** la partie inférieure (1) dudit canal possède au moins une cloison séparatrice (6),
- **que** la tête (32, 42) de l'agrafe courte (30, 40) coopère avec ladite cloison séparatrice (6).
